# EUROPEAN PATENT APPLICATION

(11) **EP 2 741 203 A2**
(43) Date of publication of application: **11.06.2014**
(21) Application number: 13196102.1
(22) Date of filing: 06.12.2013
(51) Int. Cl.: G06F 3/0488, G06F 3/0482, G06F 9/44

(54) **Object operation apparatus and non-transitory computer-readable storage medium**

(30) Priority: 06.12.2012 JP 2012267372
(71) Applicant: Konica Minolta, Inc., Tokyo 100-7015 (JP)
(72) Inventor: Takamura, Shunsuke, Tokyo, 100-7015 (JP); Ogino, Shinya, Tokyo, 100-7015 (JP); Motoi, Toshihiro, Tokyo, 100-7015 (JP); Hoshino, Noriko, Tokyo, 100-7015 (JP); Kanazawa, Ikuko, Tokyo, 100-7015 (JP); Shudo, Takao, Tokyo, 100-7015 (JP)
(74) Representative: Henkel, Breuer & Partner

(57) **Abstract**

An object operation apparatus includes a display section; an input section configured to accept a selection of an object and an operation on an object, where the object is displayed on the display section; and a control section configured to, in response to accepting the object selection, set a selection state of the object to a selected state or a unselected state for each user, and in response to accepting the operation on the object in the selected state, control the object according to the operation. The control section is configured to, when the operation is a predetermined operation, control the object in the selected state according to the predetermined operation such that a control of the object under the condition that the object is selected by one user differs from a control of the object under the condition that the object is selected by plural users.

## Description

This application is based on Japanese Patent Application No. 2012-267372 filed on Dec. 6, 2012, in the Japan Patent Office, the entire content of which is hereby incorporated by reference.

### TECHNICAL FIELD

The present invention relates to an object operation apparatus and a non-transitory computer-readable storage medium storing an object operation control program. Especially, the present invention relates to an object operation apparatus including a screen on which objects can be displayed and operated, and a non-transitory computer-readable storage medium storing an object operation control program for controlling object operations.

### BACKGROUND

In recent years, display devices of LCDs (Liquid Crystal Displays) is increasing in size, and large-sized touch panels which are large-sized display devices each equipped with a touch sensor are in the market. Further, electronic conferences such that a large-sized touch panel is employed and users have discussions and put forward various possible ideas with drawing objects such as characters and figures on the screen of the touch panel and operating the objects, are becoming popular. Since plural users sometimes carry out various operations on the same object in such an electronic conference, there have been proposed various methods to avoid a conflict between the operations.

For example, Japanese Unexamined Patent Publication (JP-A) No. H05-324359 discloses a technique, under the situation that plural users work together on objects, to protect an object from being operated simultaneously by plural users by locking a part of targets of the operations so as not to be operated by others. WO2010/035491 discloses a technique such that, under the situation that plural users work together on objects, respective users obtain an object into their work space for personal use and then operate the obtained object. JP-ANo. 2010-033363 discloses a technique to determine users performing two types of operation: "an operation on an object (picture)" and "a selection for accepting an object into an album" and to restrict contents of an instructed operation under the condition that a user performing the operation on an object do not agree with a user selecting the object.

When a display device is used for the above-described electric conference, users sometimes desire the display device to allow plural users to operate the same object simultaneously. However, the conventional techniques were provided with focusing on preventing the conflict of operations performed by plural users on the same object, and did not allow the plural users to select the same object simultaneously.

For example, assuming that user A and user B were operating the same object, each object was allowed to have only one selection state (the selected state or the unselected state) in the above combinational systems, that is, an operation right of each object was given only to one user. During an object was selected by any one of the user A and user B in such the systems, the other could not select the same object. Therefore, object operability of the systems deteriorated and it was difficult for users to have active discussions with using the systems for purpose of an electric conference, which was a problem. The present invention seeks to solve the problem.

### SUMMARY

There are disclosed illustrative object operation apparatuses and non-transitory computer-readable storage media each storing an object operation control program, by which plural users can handle one object simultaneously.

An illustrative object operation apparatus reflecting one aspect of the present invention is an object operation apparatus which allows users to operate one or more objects. The object operation apparatus comprises: a display section configured to display one or more objects; and an input section configured to accept a selection of an object displayed on the display section and an operation on an object displayed on the display section. The object operation apparatus further comprises a control section configured to, in response to accepting the selection of the object displayed on the display section, set a selection state of the object to one of a selected state and a unselected state for each of the users, and in response to accepting the operation on the object in the selected state, control the object in the selected state according to the operation. The control section is configured to, upon the operation being a predetermined operation in controlling the object in the selected state according to the operation, control the object in the selected state according to the predetermined operation such that a control of the object under a condition that the object is selected by one user differs from a control of the object under a condition that the object is selected by a plurality of users.

An illustrative non-transitory computer-readable storage medium reflecting one aspect of the present invention stores an object operation control program for controlling an apparatus including a display section configured to display one or more objects and an input section configured to accept a selection of an object displayed on the display section and an operation on an object displayed on the display section. The program comprises computer executable instructions for: in response to accepting the selection of the object displayed on the display section, setting a selection state of the object to one of a selected state and a unselected state for each of users, and in response to accepting the operation on the object in the selected state, controlling the object in the selected state according to the operation. The controlling the object in the selected state includes, upon the operation being a predetermined operation, controlling the object in the selected state according to the predetermined operation such that a control of the object under a condition that the object is selected by one user differs from a control of the object under a condition that the object is selected by a plurality of users.

Other features of illustrative embodiments will be described below.

### BRIEF DESCRIPTION OF THE DRAWINGS

Embodiments will now be described, by way of example only, with reference to the accompanying drawings which are meant to be exemplary, not limiting, and wherein like elements numbered alike in several figures, in which:
Each of FIGs. 1A to 1C is a schematic diagram illustrating a general configuration of an object operation apparatus of an embodiment of the present invention;
FIG. 2 is a block diagram showing a configuration of an object operation apparatus of an embodiment of the present invention;
FIG. 3 is a flowchart illustrating processes (processes of an object selection) of an object operation apparatus of an embodiment of the present invention;
FIG. 4 is a flowchart illustrating processes (processes for displaying a selection state of an object) of an object operation apparatus of an embodiment of the present invention;
FIG. 5 is a flowchart illustrating processes (processes according to an object operation) of an object operation apparatus of an embodiment of the present invention;
FIG. 6 is a flowchart illustrating processes (processes for reflecting an object operation) of an object operation apparatus of an embodiment of the present invention;
FIG. 7 is a table of an example of management information showing a selection state of each object for each user;
Each of FIGs. 8A to 8D is a diagram illustrating an example of the way to select an object of an embodiment of the present invention;
Each of FIGs. 9A to 9D is a diagram illustrating an example of the way to display selection states of objects of an embodiment of the present invention;
Each of FIGs. 10A and 10B is a diagram illustrating an example of the way to display usage states of objects of an embodiment of the present invention;

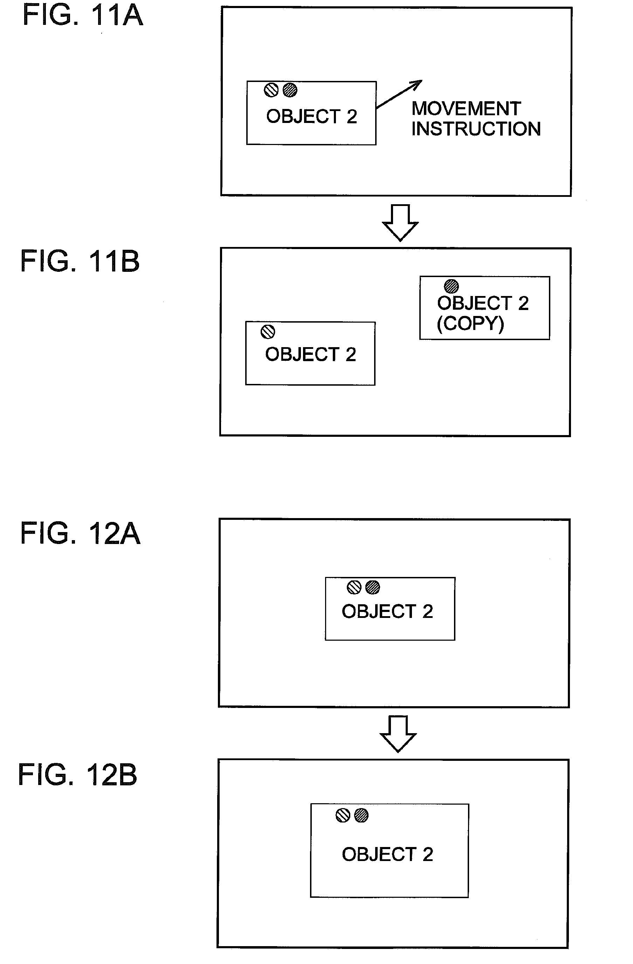

FIGs. 11A and 11B are diagrams illustrating an example of the way to operate an object and a result of the operation of an embodiment of the present invention; and
FIGs. 12A and 12B are diagrams illustrating another example of the way to operate an object and a result of the operation of an embodiment of the present invention.

### DETAILED DESCRIPTION

Illustrative embodiments of object operation apparatuses and non-transitory computer-readable storage media each storing an object operation control program will be described with reference to the drawings. It will be appreciated by those of ordinary skill in the art that the description given herein with respect to those figures is for exemplary purposes only and is not intended in any way to limit the scope of potential embodiments may be resolved by referring to the appended claims.

One aspect of the present invention is an object operation apparatus which allows users to operate one or more objects. The object operation apparatus comprises: a display section configured to display one or more objects; and an input section configured to accept a selection of an object displayed on the display section and an operation on an object displayed on the display section. The object operation apparatus further comprises a control section configured to, in response to accepting the selection of the object displayed on the display section, set a selection state of the object to one of a selected state and a unselected state for each of the users, and in response to accepting the operation on the object in the selected state, control the object in the selected state according to the operation. Further, the control section is configured to, upon the operation being a predetermined operation in controlling the object in the selected state according to the operation, control the object in the selected state according to the predetermined operation such that a control of the object under a condition that the object is selected by one user differs from a control of the object under a condition that the object is selected by a plurality of users.

By giving plural selection states to each object (in other words, allowing plural users to obtain an operation right of the object), plural users can select one object simultaneously. Under the condition that one user performs a predetermined operation on an object, which impedes an operation performed by another, the conflict of operations performed by plural users can be restricted by changing a control of the predetermined operation between when the object is selected by one user and the object is selected by plural users.

As another aspect of the present invention, the control section can be configured to, upon the operation being other than the predetermined operation in controlling the object in the selected state according to the operation, control the object in the selected state according to the operation such that the control of the object under a condition that the object is selected by one user is same as the control of the object under a condition that the object is selected by a plurality of users.

Under the condition that one user performs an operation which does not impede an operation performed by another (an operation other than the predetermined operation), the user can perform the operation on an object as the user desires, by not changing a control of the operation between when the object is selected by one user and the object is selected by plural users, which enhances the object operability of the object operation apparatus.

As another aspect of the present invention, the control section can be configured to, in response to accepting the operation on the object in the selected state, reflect the operation to all other objects selected by a user performing the operation on the object.

By reflecting the operation to all the objects displayed on the screen, plural objects can be operated all together, which enhances the object operability of the object operation apparatus.

As another aspect of the present invention, the control section can be configured to display information of a user or users on the display section so as to be distinguishable from each other, with the user or users being associated with each object displayed on the display section, where the user or users are selecting the each object displayed on the display section. Alternatively, the control section can be configured to display information of a user or users on the display section so as to be distinguishable from each other, where the user or users are selecting at least one object displayed on the display section.

By changing the way to display an object according to the selection states and the usage states of the object, users can find the selection state and the usage state of the object easily, which prevents the conflict of operations before the conflict occurs.

As another aspect of the present invention, the control section can be configured to divide each object displayed on the display section into a plurality of areas to assign the areas separately to users, and recognize a user selecting an object displayed on the display section based on one of the areas where the user designates on selecting the object. Alternatively, the control section can be configured to set a plurality of areas around each object displayed on the display section to assign the areas separately to users, and recognize a user selecting an object displayed on the display section based on one of the areas where the user designates on selecting the object.

By preparing areas for each object and determining a user according to an area where the user has designated on selecting the object, users can select the object without difficulty and a group of objects concerning a certain user can be operated together, which prevents the conflict of operations before the conflict occurs.

Another aspect of the present invention is a non-transitory computer-readable storage medium storing an object operation control program for controlling an apparatus. The apparatus includes a display section configured to display one or more objects and an input section configured to accept a selection of an object displayed on the display section and an operation on an object displayed on the display section. The program comprises computer executable instructions for: in response to accepting the selection of the object displayed on the display section, setting a selection state of the object to one of a selected state and a unselected state for each of users, and in response to accepting the operation on the object in the selected state, controlling the object in the selected state according to the operation. The controlling the object in the selected state includes, upon the operation being a predetermined operation, controlling the object in the selected state according to the predetermined operation such that a control of the object under a condition that the object is selected by one user differs from a control of the object under a condition that the object is selected by a plurality of users.

By executing the program on a processor to cause the processor to carry out the above-described control, the control can be realized in various embodiments.

The above-described object operation apparatuses and non-transitory computer-readable medium as embodiments of the present invention allow users to handle one object simultaneously because of the following reasons.

There is provided a control section in an object operation apparatus comprising: a display section configured to display one or more objects; and an input section configured to accept a selection of an object displayed on the display section and an operation on an object displayed on the display section. The control section is configured to, in response to accepting the selection of the object displayed on the display section, set a selection state of the object to one of a selected state and a unselected state for each of the users, and in response to accepting the operation on the object in the selected state, control the object in the selected state according to the operation. When a predetermined operation is performed on an object, the control section controls the object according to the predetermined operation such that the control of the object under the condition that the object is selected by one user differs from the control of the object under the condition that the object is selected by plural users.

As illustrated in the description about the background, electronic conferences such that a large-sized touch panel is employed and users have discussions and put forward various possible ideas with drawing objects such as characters and figures on the screen of the touch panel and operating the objects, are now hold popularly. However, in the conventional systems, each object only had one selection state (the selected state or the unselected state) and it affected the object operability of the systems, which was a problem.

That is, when plural users were allowed to operate one object simultaneously, operations of the users conflicted with each other. In view of that, a conventional system was controlled to allow only one user to select an object. Therefore, under the condition that a first user selected a predetermined object, and then, a second user tried to select the same object, what the system could carry out was only prohibiting the second user from selecting the object, or making the selection of the object performed by the second user valid after canceling the selection of the object performed by the first user.

As described above, since the conventional systems did not allow the plural users to operate one object simultaneously, users having no operation right had to wait for the completion of the operation on the object performed by a user having an operation right. Therefore, when the conventional systems were used for an electric conference, users hardly put forward their possible ideas while operating objects thereon, which harmed users' convenience.

In view of that, in order to allow plural users to operate the same object simultaneously while controlling operations performed by the plural users not to conflict with each other, an object operation apparatus as one embodiment reflecting the present invention is configured to give plural selection states to each object (allow each user to set one of the selected state and the unselected state for each object), and to perform a control of an object according to an instructed operation so as to the control of the object under the condition that the object is selected by one of the users differs from the control of the object under the condition that the object is selected by plural users.

For example, assuming a situation when a certain user performs a predetermined operation on an object (which can exert great influence on another operation on the object performed by another user, such as a deletion of an object and an ungrouping of objects) under the condition that the object is selected by plural users, the object operation apparatus as the embodiment of the present invention is configured to, in response to the situation, prohibit the predetermined operation so as to allow other users to operate the concerned object. Assuming another situation when a certain user performs a predetermined operation on an object (which can exert influence on another operation on the object performed by another user, such as a movement of an object and a grouping of objects), the object operation apparatus is configured to, in response to the situation, make a copy of the object or objects so as to allow other users to operate the concerned object or objects. Assuming another situation when a certain user performs an operation, which excludes the predetermined operations, on an object (which can exert little influence on another operation on the object performed by another user, such as a property change a property of an object, a copy of an object, and an enlargement and reduction of an object), the object operation apparatus is configured to execute the operation which has been instructed for the object, under the situation. Further, the object operation apparatus is configured to, in response to the condition that plural objects are selected by one user at the same time, reflect an operation to all the selected object selected by the user.

As described above, by controlling an object according to the operation performed on the object so as to change the control depending on condition, that is, the condition that the object is selected by one user and the condition that the object is selected by plural users, plural users can select the same object simultaneously and the conflict between the operations performed by the plural users can be restricted. Further, by reflecting an operation to plural objects, the object operability of the object operation apparatus can be enhanced.

Further, the object operation apparatus may be configured to assign the areas of each object separately to users, so as to recognize a user selecting an object based on one of the areas where the user has been designated on selecting the object, and may be configured to change a displaying manner of an object according to the selection states and the usage states of the object.

Such the controls allow users to easily recognize which user operates which object. Therefore, the conflict between operations performed by plural users can be restricted effectively and the object operability of the object operation apparatus can be enhanced.

### EXAMPLE

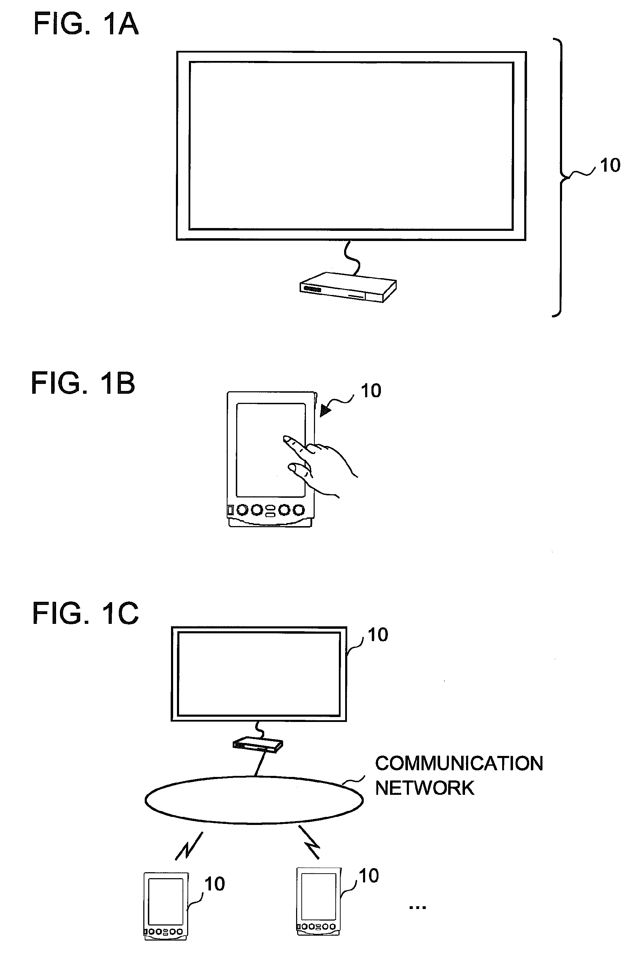

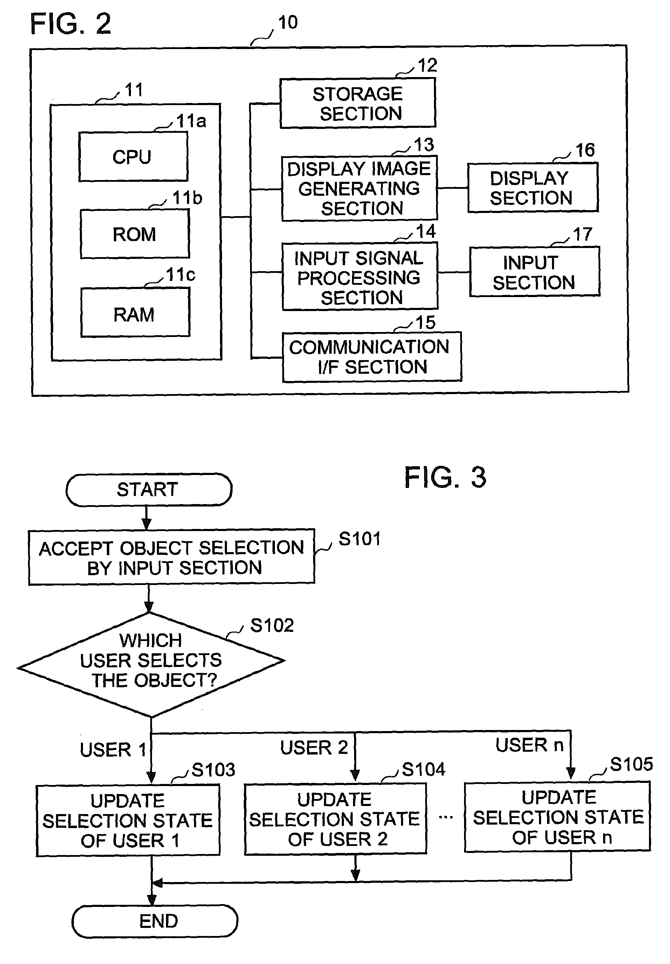

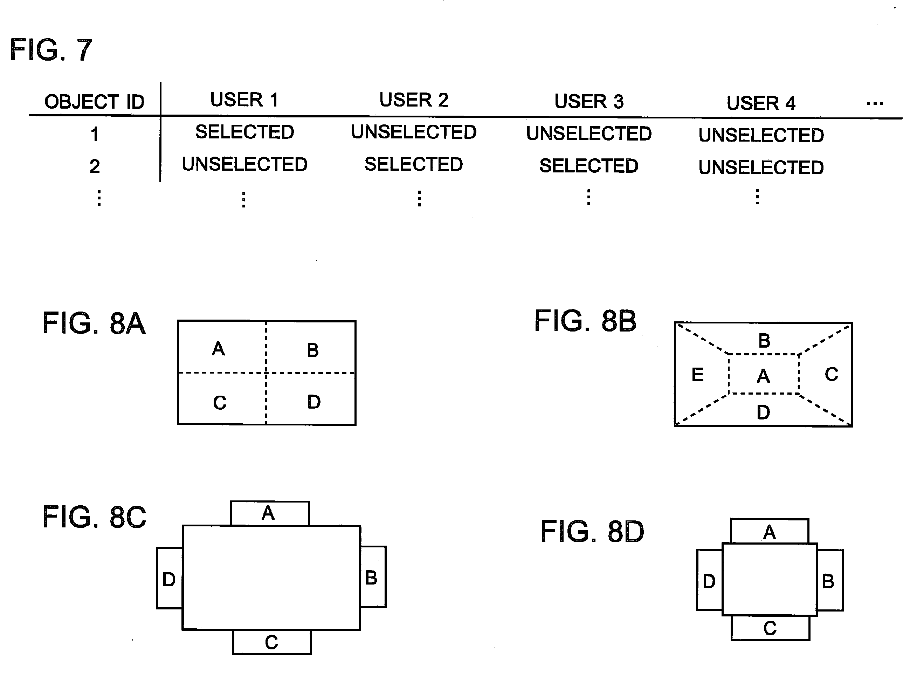

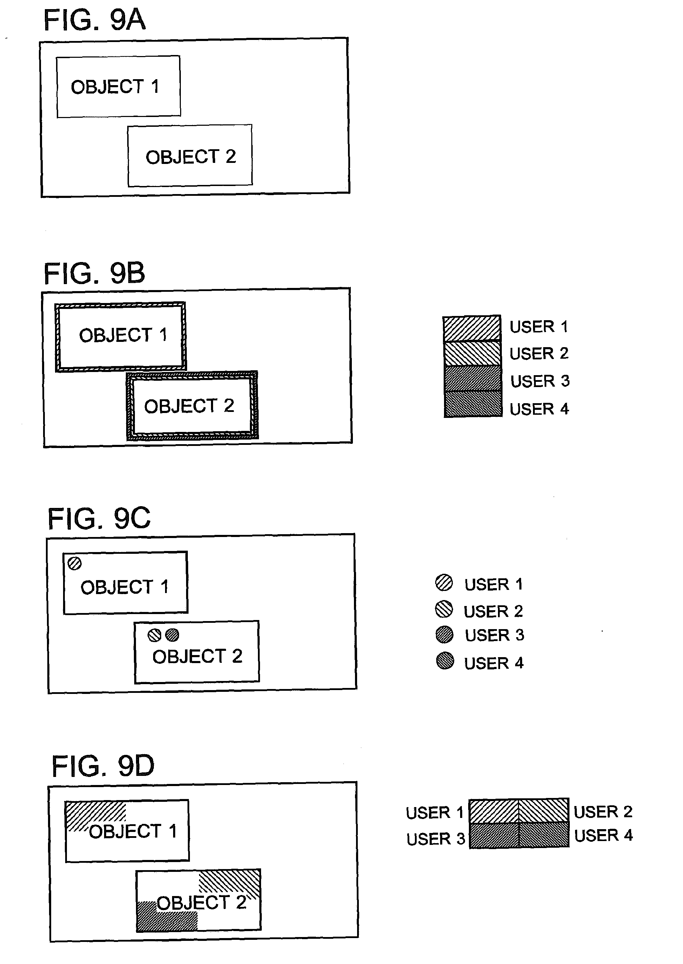

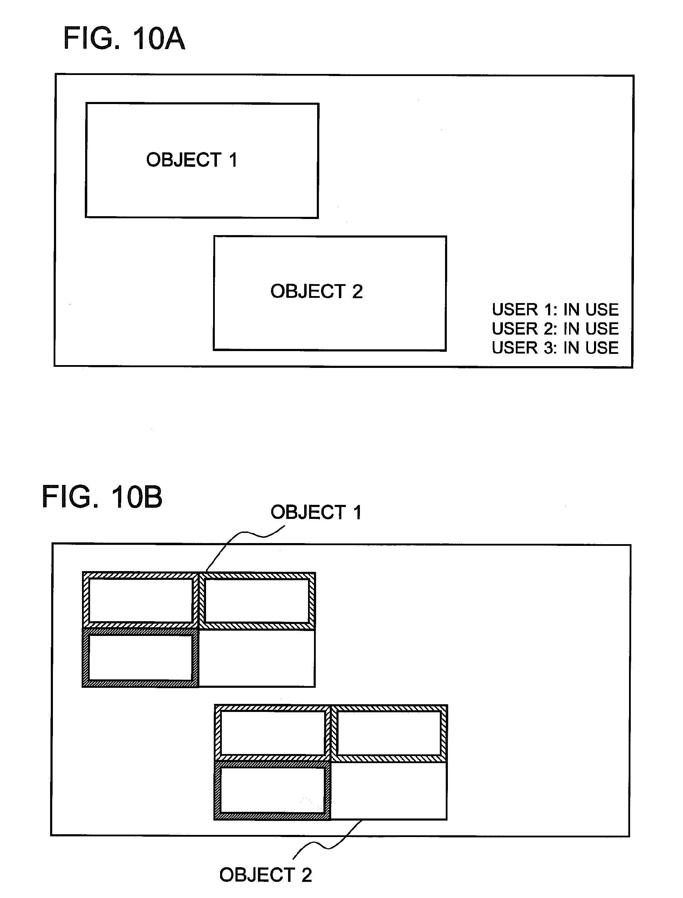

In order to describe the above-described embodiments in detail, illustrative object operation apparatuses and illustrative non-transitory computer-readable media relating to an example of the present invention will be described with reference to FIGs. 1A through to 12B. Each of FIGs. 1A to 1C is a schematic diagram illustrating a general configuration of an object operation apparatus of the present example. FIG. 2 is a block diagram illustrating a configuration of an object operation apparatus of the present example. Each of FIGs. 3 to 6 is a flowchart illustrating processes of an object operation apparatus of the present example. FIG. 7 is a table of an example of management information showing a selection state of each object for each user. Each of FIGs. 8A to 8D is a diagram illustrating an example of the way to select an object. Each of FIGs. 9A to 9D, 10A and 10B is a diagram illustrating an example of the way to display selection states or usage states of objects. FIGs. 11A, 11B, 12A and 12B are diagrams illustrating examples of the way to operate an object and a result of the operation.

Object operation apparatus 10 of the present example includes a touch panel, which is a display device equipped with a touch sensor. The object operation apparatus 10 may have the structure, for example, that a display unit composed of a touch panel and a control unit configured to control operations performed on objects are separately provided as shown in FIG. 1A, or may have the structure that the control unit is arranged inside the display unit so as to be one body. Further, object operation apparatus 10 is not limited to an apparatus equipped with a touch panel with a large-sized screen, and may be a mobile terminal such as a notebook-type personal computer, a tablet terminal, a PDA (Personal Digital Assistant) and a smart phone, as shown in FIG. 1B. Further, object operation apparatus 10 may be a stand-alone structure which works independently, or may be provided in a system in which plural object operation apparatuses are connected together with a communication network to display the same objects on their screens as shown in FIG. 1C.

The object operation apparatus 10 of the present example is provided as the structure to allow users to operate objects with a touch panel, but may be configured to allow users to operate objects with another means in place of a touch panel. For example, plural mice may be connected to object operation apparatus 10 with a connection means such as a cable, radio, infrared ray and Bluetooth (registered trademark) so that plural mouse cursors are displayed on the screen of the apparatus, to allow users to operate objects by using the respective mice. Alternatively, plural pointers emitting high-directional light may be connected to object operation apparatus 10 with a connection means such as a cable, radio, infrared ray and Bluetooth (registered trademark) so that the apparatus can recognize the positions of light emitted by the pointers on its screen, so as to allow users to operate objects by using the respective pointers.

FIG. 2 is a block diagram illustrating the structure of object operation apparatus 10. Object operation apparatus 10 includes control section 11, storage section 12, display image generating section 13 and input signal processing section 14, and further includes, if necessary, communication interface section 15, display section 16 and input section 17. Regarding the structure of FIG. 1A, the control unit includes control section 11, storage section 12, display image processing section 13 and input signal processing section 14, and includes, if necessary, communication interface section 15, and the display unit includes display section 16 and input section 17.

Control section 11 is composed of CPU (Central Processing Unit) 11a and memories such as ROM (Read Only Memory) 11b and RAM (Random Access Memory) 11c. CPU 11a reads programs for controlling operations of object operation apparatus 10 from ROM 11b or storage section 12, and expands and executes the programs on RAM 11c.

The control section 11 (or an object operation control program working in the control section 11) is configured to, in response to accepting a selection of an object such as characters and a figure displayed on display section 16, receive information to determine the selected object from input signal processing section 14, and change the selection state of the object (into the selected state or the unselected state). In order to allow plural users to select the same object simultaneously, the control section 11 of the present example is configured to divide each object into plural areas (or set plural areas around each object) and to make the areas associated with users separately so that the control section can recognize which user selects which object. When a user selects an object, the control section 11 changes the selection state of the object (into the selected state or the unselected state) with being associated with the user corresponding to the area designated by the user. The control section 11 is further configured to generate display information (for example, a frame, a mark and a character and other information to be added to the object) to which the above selection state and a usage state of the object are reflected and to send the display information to display image generating section 13.

The control section 11 (or the object operation control program) is configured to, in response to accepting an operation on a selected object, receive information to determine the operation from input signal processing section 14, and performs a control on the object in the "selected" state according to the operation performed for the object. In order to allow plural users to the same object simultaneously, the control section 11 of the present example is configured to, in response to accepting a predetermined operation instructed by a certain user, which can exert influence on an operation performed by another user, perform the control according to the predetermined operation such that the control of the object under the condition that the object is selected by only one user differs from the control of the object under the condition that the object is selected by plural users, so as not to cause the conflict between operations performed by the plural users. For example, when one of the plural users performs a predetermined operation such as a deletion of an object and an ungrouping of objects (separation of grouped objects), the control section 11 makes the predetermined operation invalid. When one of the plural users performs a predetermined operation such as a movement of an object and a grouping of objects, the control section 11 makes a copy of the object or objects and performs a control according to the operation on the copy. When one of the plural users perform an operation such as a property change of an object (change of the object in color, line width, line type or font), copy an object, enlargement an object and reduction of an object, since other users can operate the object even after the operation is executed on the object, the control section 11 performs a control according to the operation, such as a property change of the object, copy of the object, enlargement of the object and reduction of the object, as normal processes. The control section 11 is further configured to generate display information of the operated object (for example, the movement amount and movement direction of the object, the display manner of the object, and the enlargement or reduction ratio) to which the above operation are reflected and to send the display information to display image generating section 13.

Storing section 12 is composed of a HDD (Hard Disk Drive) and is configured to store information to make areas of each object associated with users, management information to manage the selection states of each object and data to be the original data of a display image (such as object images).

Display image generation section 13 is configured to receive the display information from control section 11, create a display image according to a selection or operation of an object by using the original data stored in storing section 12, and send the created display image to display section 16.

Input signal processing section 14 is configured to receive an input signal from input section 17, to determine a selected object and an instructed operation based on the received input signal, and to send information to determine the object and information to determine the operation to control section 11.

Communication interface section 15 is composed of a NIC (Network Interface Card) and a modem. Communication interface section 15 is configured to, if necessary, establish a communication with another object operation apparatus 10 and to perform transmission and reception of display images. In the present example, in order to allow plural users to select or operate the same object simultaneously under the condition that plural object operation apparatuses 10 are provided to form a system, the plural object operation apparatuses 10 are configured to display the same screen contents on their display sections 16.

Display section 16 is composed of a device such as a LCD (Liquid Crystal Display) and an organic-electroluminescence display. Display section 16 is configured to display objects handwritten and inputted with a pen or a user's finger. Display section 16 is further configured to display items such as a frame, mark and character, for indicating that an object is on selection or operation, with the items being associated with the object, and to display an object on which an operation has been performed.

Input section 17 is a touch sensor equipped with lattice-shaped transparent electrodes arranged on display section 16. Input section 17 is configured to sense a single-touch operation performed with one pen or a user's finger or a multi-touch operation performed by plural pens or user's fingers, based on electromagnetism, electrostatic capacitance, pressure and touched area, and to send the input signal to input signal processing section 14.

In the above description, display image generating section 13 and input signal processing section 14 are provided separately from control section 11. Alternatively, control section 11 (the object operation control program) may carry out the functions of display image generating section 13 and input signal processing section 14. Further, in the above description, the structure including display section 16 and input section 17 as one body has been provided. However, the object operation apparatus 10 may uses an existing display device (such as a display and a projector) as display section 16 and may use an existing input device (such as a mouse and a touch panel) as input section 17.

Hereinafter, processes performed by the object operation apparatus 10 having the above structure will be described with reference to flowcharts shown in FIGs. 3 to 6.

First, processes performed when a user select an object will be described with reference to FIG. 3. It is assumed that the selection states of each object are set to the default (the unselected state) at the beginning of the processes.

When a user touches a predetermined area of an object displayed on display section 16, input section 17 sends an input signal according to the touched position to input signal processing section 14. Input signal processing section 14 determines the selected object according to the relationship of the display position of the object which has been stored in storing section 12 and the touched position, and sends information to determine the object to control section 11 (S101).

Next, control section 11 (object operation control program) refers to information to make users associated with respective areas of the object, which has been stored in storage section 12 in advance, and recognizes the user corresponding to the touched position (S 102).

Each of FIGs. 8A and 8B illustrates an example that each object (which may have an arbitrary shape, and is rectangular in this case) is divided into plural areas and the areas are assigned separately to users. Control section 11 can recognize a user based on an area of the object touched by the user. When the object is small in size, the divided areas are small in size, too. In such the object, users hardly touch the areas assigned to them. In this case, the control section 11 may set plural areas around the outside of the object and assign the areas separately to users, as shown in FIG. 8C. Since the size of the each area is defined with corresponding to the size of the object, small-sized areas are naturally set around the small-sized object, which makes users' operations difficult. In view of that, as shown in FIG. 8D, control section 11 may control the areas not to be smaller than the minimum size which has been defined previously, even when the object is so small.

Though there is no need to display lines representing the areas (border lines) and information to determine users to which the respective areas are assigned (user information) on the screen, users can easily find the area to touch and can select the object easily if the border lines and the user information are displayed on the screen as shown in FIGs. 8A to 8D. At that time, both of the border lines and the user information may be displayed on the screen, or any one of them may be displayed on the screen. The control section may further be configured to turn the border lines and the user information to the displayed/hidden state, depending on the situation. When the border lines and the user information overlap with the object so that users hardly see the object, the visibility of the object can be enhanced by turning the border lines and the user information into the hidden state.

The control section 11 may be configured to, in response to the situation that the border lines and the user information of one object are displayed on the display section 16, display the borders and the information of the other objects on the display section 16 together with those of the first object. Such the control reduces users' time and effort to switch the display state and the hidden state of the borders and the user information for each object when a user wants to select one object after another, and enhances the users' convenience. The control section 11 may be configured to display a legend so as to connect the users with the respective areas, at a predetermined position on display section 16, rather than displaying the border lines and the user information for each object, which enhances the visibility of the objects.

Returning to the flowchart shown in FIG. 3, control section 11 (the object operation control program) updates management information to manage the selection states of objects based on the selected object and the recognized user (S103 to S105). Then, control section 11 performs the above process at each time when the selection of an object is accepted, to switch the selected state and the unselected state of the management information for one object after another.

FIG. 7 illustrates an example of the management information to manage the selection states of objects, wherein the selection states of objects are managed by using a matrix of "OBJECT ID" and "USER". Control section 11 adds an item of "OBJECT ID" to the matrix at each time when an object is created. As for the items of "USER", control section 11 adds an item of "USER" to the matrix at each time when a new user operates an object or control section 11 has established the items of "USERS" according to the number of areas of each object in advance. At each time when an object is selected, control section 11 updates the selection state of the concerning item of "OBJECT ID" and the concerning item of "USER".

For example, when only USER 1 selects OBJECT 1, control section 11 turns the selection state corresponding to OBJECT 1 and USER 1 into the "selected" state. When USER 2 and USER 3 select OBJECT 2, control section 11 turns the selection state corresponding to OBJECT 2 and USER 2 and the selection state corresponding to OBJECT 2 and USER 3 into the "selected" state.

In the above flow, control section 11 divides an object into plural areas (or sets plural areas around an object) and assigns the areas separately to users, so as to recognize the user selecting the object, but the way to recognize the user selecting an object is not limited to that. For example, control section 11 may use a "human body communication" to compare a measured electric potential with electric potentials of users which have been stored previously and recognize a user who has touched input section 17. Alternatively, input signal processing section 14 may determine the user by recognizing a pen touching the input section 17 based on information of pens used by users which have been stored previously. Further, object operation apparatus 10 may further include an imaging unit such as a camera and may recognize a user by performing image processing (such as pattern recognition processing and feature-point extraction processing) on an image taken with the imaging unit.

By using the above management information, control section 11 (the object operation control program) can manage the information by which user each object is selected. However, if users do not know whether each object is selected by another or not, plural users can select a certain object simultaneously. That is, if one user knows which object is selected by which of users before the user selects an object, the user can select an object which is selected by none of the users or select an object selected by a smaller number of users, which allows the conference to advance effectively.

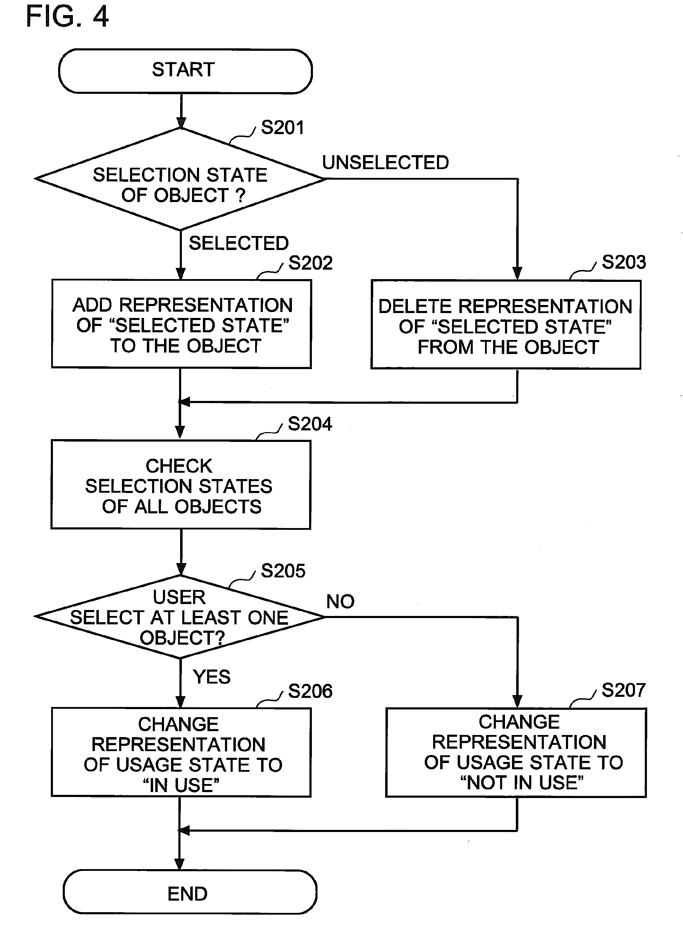

Therefore, control section 11 displays users selecting each object onto display section 16 with the users being associated with the each object so as to be distinguishable from another. By displaying the selection states of each object with being associated with the each object, the object operation apparatus can encourage users not to select a certain object with concentration, which prevents the conflict of operations on the object before it happens. The processes of object operation apparatus 10 under the above situation will be described with reference to the flowchart of FIG. 4. The flow is executed additionally after the steps of S 103 to S105 of the flowchart of FIG. 3.

First, control section 11 (the object operation control program) confirms the selection state of an object with referring to the above management information (S201). When the selection state of the object is the "selected" state, control section 11 generates display information representing that the object is on selection and sends the display information to display image generating section 13. Display image generating section 13 displays the display information as a representation of the selected state additionally to the object on display section 16 (S202). On the other hand, when the selection state of the object is the "unselected" state, control section 11 sends an instruction to delete the display information as the representation of the selected state to display image generation section 13 and deletes the display information as the representation of the selected state which has been displayed on display section 16 (S203). Then, control section 11 confirms the selection state of each of the other objects (S204).

FIGs. 9A to 9D illustrate examples of the way to display the selection states of objects. In those examples, it is assumed that there are two objects on the screen and there are four users, as illustrated in FIG. 7. FIG. 9A illustrates the state before the objects are selected. When USER 1 selects OBJECT 1 and USER 2 and USER 3 select OBJECT 2 under the state of FIG. 9A, control section 11 displays frames in predetermined colors additionally to the objects as illustrated in FIG. 9B, where the colors of the frames are those which have been previously assigned to the respective users selecting the object (which are expressed by different types of hatching in FIG. 9B). Alternatively, as illustrated in FIG. 9C, control section 11 may display markers in predetermined colors or shapes additionally to the objects, where the colors or shapes of the markers are those which have been previously assigned to the respective users selecting the object. Alternatively, as illustrated in FIG. 9D, control section 11 may divide each object into plural areas and paint over the areas in predetermined colors, where the colors are those which have been previously assigned to the respective users. As described above, by displaying the selection states of objects, the object operation apparatus can encourage plural users not to select the same object, which prevents the conflict of operations before it happens.

Additionally to the way to display the selections states on each object, the object operation apparatus may display usage states (participation states) of each user, so that users can have discussions and put forward various possible ideas more effectively. In view of that, the object operation apparatus of the present example is configured to display a user who is selecting at least one object onto display section 16 so as to be distinguishable from each other. Control section 11 (the object operation control program) refers to the management information and confirm whether each user selects an object or not (S205). If the concerned user selects at last one object, control section 11 generates information to represent that the user is using the at last one object and send the display information to display image generating section 13. The image generating section 13 displays the display information on display section 16 to change the representation of the usage state of the object into "in use" (S206). On the other hand, if the concerned user is selecting no object, display image generating section 13 hides the representation of the usage state of the user or change the representation of the usage state on the display section 16 into "not in use".

FIGs. 10A and 10B illustrates examples of the way to display the usage state of objects. Similarly to the above-described examples, it is assumed that there are two objects on the screen and there are four users. When USER 1 selects OBJECT 1 and USER 2 and USER 3 select OBJECT 2, display image generation section 13 may display the usage state list at a predetermined position (at the lower right in FIG. 10A) on the screen of the display section 16 as shown in FIG. 10A. The usage state list may be displayed for each object. For example, as illustrated in FIG. 10B, control section 11 may display, for each object, frames in predetermined colors representing users who are now using the object on the screen, where the colors have been previously assigned to users. By using the usage states of users displayed on the screen, users can recognize which user is using an object (in other words, which user participates in the conference), which allows the users to have more-effective discussions and put forward various possible ideas more effectively.

In the above descriptions, FIGs. 9A to 9D illustrate examples of the way to display the selection states of objects and FIGs. 10A and 10B illustrates examples of the way to display the usage states of objects. If both of the two types of representation are desired to be displayed on the screen, the object operation apparatus is required to display them in different manners. For example, in combination with the representation of the usage states shown in FIG. 10A, the selection states of objects can be displayed in the manner of any one of FIGs. 9B to 9D. However, in combination with the representation of the usage states shown in FIG. 10B, the selection states of objects are preferably displayed in the manner of FIG. 9D.

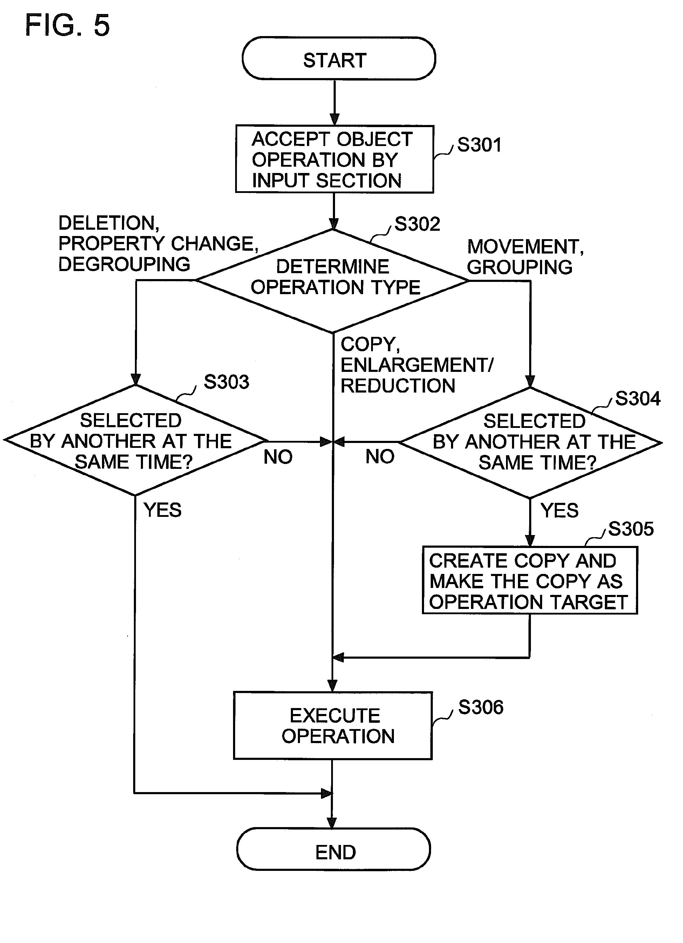

Next, processes of object operation apparatus 10 performed when a selected object is operated will be described with reference to the flowchart of FIG. 5. The flow is executed additionally after the flow of FIG. 3 or FIG. 4.

First, input section 7 accepts an operation on an object performed by a user and sends a signal according to a touched position to input signal processing section 14. Input signal processing section 14 determines the operation according to the touched position and send information to determine the operation to control section 11 (S301).

Next, control section 11 (the object operation control program) determines the type of the operation (S302). If the operation is determined as a predetermined operation which can exert great influence on an operation of another user (for example, "deletion" and "degrouping"), control section 11 refers to the management information to confirm whether the object as the target of the operation has already selected by another user. Then, if the object has already been selected by another user (YES of S303), control section 11 makes the predetermined operation invalid. If the object is not selected by any other user (NO of S303), control section 11 performs a control according to the predetermined operation on the object (S306).

If the operation is determined as a predetermined operation which can exert influence on an operation of another user (for example, "movement" and "grouping"), control section 11 similarly refers to the management information to confirm whether the object as the target of the operation has already selected by another user. Then, if the object has already been selected by another user (YES of S304), control section 11 creates a copy of the object as a target of the predetermined operation, and performs a control according to the predetermined operation on the copy (S305, S306). If the object is not selected by any other user (NO of S304), control section 11 performs a control according to the predetermined operation on the object (S306).

FIGs. 11A and 11B illustrate an example of the situation when one user performs a predetermined operation (movement in this example) which can exert influence on an operation of another user. For example, when USER 3 performs an operation to instruct a movement of OBJECT 2 (an operation to slide the user's finger touching OBJECT 2) in the condition that USER 2 and USER 3 are selecting OBJECT 2 as shown in FIG. 11 A, control section 11 makes a copy of OBJECT 2 and moves the copy as shown in FIG. 11B. At that time, control section 11 may display additional information such as frames, marks and characters, representing that USER 2 and USER 3 are selecting OBJECT 2 with each of the original and the copy of OBJECT 2, or may display additional information just representing USER 2 with the original of OBJECT 2 and display additional information just representing USER 3 with the copy of OBJECT 2.

If the operation is determined as an operation which can exert little influence on an operation of another user (which is an operation other than the above-described predetermined operations, such as "property change (for example, in background color)", "copy" and "enlargement/reduction"), control section 11 (the object operation control program) performs a control according to the operation on the object instantly (S306).

FIGs. 12A and 12B illustrate examples of the situation when one user performs an operation ("enlargement" in this case) which can exert little influence on an operation of another user. For example, when USER 3 performs an operation to instruct an enlargement of OBJECT 2 shown in FIG. 12A (an operation to increase the interval of the user's fingers touching OBJECT 2), control section 11 enlarges the original OBJECT 2 because USER 2 can operate OBJECT 2 even when the operation of USER 3 is actually executed.

As described above, when a predetermined operation is performed on a selected object, the control section of the object operation apparatus of the present example performs a control according to the predetermined operation on the object so that the control according to the predetermined operation in the condition that the object is selected by one user differs from the control according to the predetermined operation in the condition that the object is selected by plural users. Such the control can prevent the conflicts of operations performed by plural users.

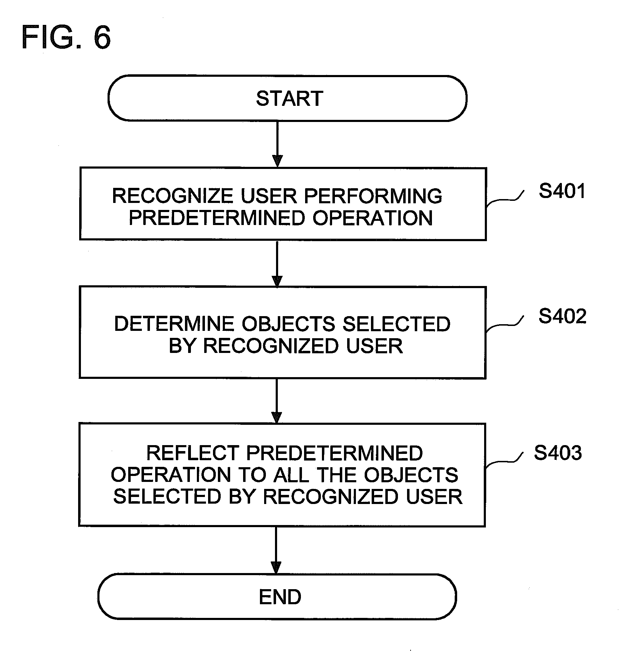

The control section 11 can execute the control according to the instructed operation on each object with following the above-described flows. When a user wants to execute the same control on plural objects, indication of the operation for every object bothers the user. In such the situation, the control section reflects the operation which has been performed on one object to all the other objects. Processes of object operation apparatus 10 under the situation will be described with reference to the flowchart illustrated in FIG. 6. This flow is executed additionally after the flow of FIG. 5.

First, control section 11 (the object operation control program) recognizes a user performing a predetermined operation on an object (S401), and refers to the above-described management information to determine the object or object which have been selected by the user (S402). Then, control section 11 (object operation control program) reflects the predetermined operation to all the objects selected by the recognized user (S403).

As described above, by reflecting the operation which has performed on one object to the other objects, the object operability of the object operation apparatus can be enhanced excellently.

The scope of the present invention is not limited to the aforementioned examples. Disclosed configurations and controlling operations of the aforementioned embodiments of the present invention can be varied by a skilled person without departing from the spirit and scope of the invention.

For example, though the processes of the object operation apparatus for the situation that two users operate one object have been described in the above example, the processes can be applied to the situation that three or more users operate one object in the same manner. That is, when one user performs a predetermined operation which can exert influence on an operation of another user, the control section may make the predetermined operation invalid or may perform a control according to the predetermined operation on a copy of the object so that another user can operate the object.

Further, though the control section of the above example is configured to divide each object into plural areas and assign the areas to users separately, the control section may be configured to assign plural areas to one user.

## Claims

1. An object operation apparatus (10) which allows users to operate one or more objects, comprising:
a display section (16) configured to display one or more objects; and
an input section (17) configured to accept a selection of an object displayed on the display section (16) and an operation on an object displayed on the display section (16),
the object operation apparatus (10) **characterized by** further comprising a control section (11) configured to,
in response to accepting the selection of the object displayed on the display section (16), set a selection state of the object to one of a selected state and a unselected state for each of the users, and
in response to accepting the operation on the object in the selected state, control the object in the selected state according to the operation,
wherein the control section (11) is configured to, upon the operation being a predetermined operation in controlling the object in the selected state according to the operation, control the object in the selected state according to the predetermined operation such that a control of the object under a condition that the object is selected by one user differs from a control of the object under a condition that the object is selected by a plurality of users.

2. The object operation apparatus (10) of claim 1,
wherein the control section (11) is configured to, upon the operation being other than the predetermined operation in controlling the object in the selected state according to the operation, control the object in the selected state according to the operation such that the control of the object under a condition that the object is selected by one user is same as the control of the object under a condition that the object is selected by a plurality of users.

3. The object operation apparatus (10) of any one of claims 1 and 2,
wherein the control section (11) is configured to, in response to accepting the operation on the object in the selected state, reflect the operation to all other objects selected by a user performing the operation on the object.

4. The object operation apparatus (10) of any one of claims 1 to 3,
wherein the control section (11) is configured to display information of a user or users on the display section (16) so as to be distinguishable from each other, with the user or users being associated with each object displayed on the display section (16), the user or users selecting the each object displayed on the display section (16).

5. The object operation apparatus (10) of any one of claims 1 to 4,
wherein the control section (11) is configured to display information of a user or users on the display section (16) so as to be distinguishable from each other, the user or users selecting at least one object displayed on the display section (16).

6. The object operation apparatus (10) of any one of claims 1 to 5,
wherein the control section (11) is configured to
divide each object displayed on the display section (16) into a plurality of areas to assign the areas separately to users, and
recognize a user selecting an object displayed on the display section (16) based on one of the areas where the user designates on selecting the object.

7. The object operation apparatus (10) of any one of claims 1 to 5,
wherein the control section (11) is configured to
set a plurality of areas around each object displayed on the display section (16) to assign the areas separately to users, and
recognize a user selecting an object displayed on the display section (16) based on one of the areas where the user designates on selecting the object.

8. The object operation apparatus (10) of any one of claims 6 and 7,
wherein the control section (11) is configured to display, on the display section (16), at least one kind of information of: border lines of the areas and information for determining users to which the areas are assigned, for each object displayed on the display section (16).

9. The object operation apparatus (10) of any one of claims 1 to 8,
wherein the predetermined operation is one of a deletion of an object and an ungrouping of objects and
the control section (11) is configured to, in response to accepting the predetermined operation, make the predetermined operation invalid.

10. The object operation apparatus (10) of any one of claims 1 to 8,
wherein the predetermined operation is one of a movement of an object and a grouping of objects and
the control section (11) is configured to, in response to accepting the predetermined operation, create a copy of the object or grouped objects and execute the predetermined operation on the copy.

11. A non-transitory computer-readable storage medium storing an object operation control program for controlling an apparatus (10) including a display section (16) configured to display one or more objects and an input section (17) configured to accept a selection of an object displayed on the display section (16) and an operation on an object displayed on the display section (16), the program **characterized by** comprising computer executable instructions for:
in response to accepting the selection of the object displayed on the display section (16), setting a selection state of the object to one of a selected state and a unselected state for each of users, and
in response to accepting the operation on the object in the selected state, controlling the object in the selected state according to the operation,
wherein the controlling the object in the selected state includes, upon the operation being a predetermined operation, controlling the object in the selected state according to the predetermined operation such that a control of the object under a condition that the object is selected by one user differs from a control of the object under a condition that the object is selected by a plurality of users.

12. The non-transitory computer-readable storage medium of claim 11,
wherein the controlling the object in the selected state includes, upon the operation being other than the predetermined operation, controlling the object in the selected state according to the operation such that the control of the object under a condition that the object is selected by one user is same as the control of the object under a condition that the object is selected by a plurality of users.

13. The non-transitory computer-readable storage medium of any one of claim 11 and 12,
wherein the controlling the object in the selected state includes, in response to accepting the operation on the object in the selected state, reflecting the operation to all other objects selected by a user performing the operation on the object.

14. The non-transitory computer-readable storage medium of any one of claims 11 to 13,
wherein the setting the selection state of the object includes displaying information of a user or users on the display section (16) so as to be distinguishable from each other, with the user or users being associated with each object displayed on the display section (16), the user or users selecting the each object displayed on the display section (16).

15. The non-transitory computer-readable storage medium of any one of claims 11 to 14,
wherein the setting the selection state of the object includes displaying information of a user or users on the display section (16) so as to be distinguishable from each other, the user or users selecting at least one object displayed on the display section (16).

16. The non-transitory computer-readable storage medium of any one of claims 11 to 15,
wherein the setting the selection state of the object includes
recognizing a user selecting the object based on one of areas of the object, the one of the areas being an area where the user designates on selecting the object, the areas are provided by dividing each object displayed on the display section (16) and assigning the areas separately to users.

17. The non-transitory computer-readable storage medium of any one of claims 11 to 15,
wherein the setting the selection state of the object includes
recognizing a user selecting the object based on one of areas of the object, the one of the areas being an area where the user designates on selecting the object, the areas are provided by being set around each object displayed on the display section (16) and assigning the areas separately to users.

18. The non-transitory computer-readable storage medium of any one of claims 16 and 17,
the setting the selection state of the object includes displaying, on the display section (16), at least one kind of information of: border lines of the areas and information for determining users to which the areas are assigned, for each object displayed on the display section (16).

19. The non-transitory computer-readable storage medium of any one of claims 11 to 18,
wherein the predetermined operation is one of a deletion of an object and an ungrouping of objects and
the controlling the object in the selected state includes, in response to accepting the predetermined operation, making the predetermined operation invalid.

20. The non-transitory computer-readable storage medium of any one of claims 11 to 18,
wherein the predetermined operation is one of a movement of an object and a grouping of objects and
the controlling the object in the selected state includes, in response to accepting the predetermined operation, creating a copy of the object or grouped objects and executing the predetermined operation on the copy.
